# EUROPEAN PATENT SPECIFICATION

(11) **EP 2 605 590 B1**
(45) Date of publication and mention of the grant of the patent: **13.12.2017**
(21) Application number: 11816107.4
(22) Date of filing: 11.08.2011
(51) Int. Cl.: H04W 36/00, H04W 36/08

(54) **METHODS AND APPARATUSES FOR FOR REPLACING A PRIMARY CELL, PCELL, IN A CARRIER AGGREGATION SYSTEM**
VERFAHREN UND VORRICHTUNGEN ZUM ERSETZEN EINER PCELL IN EINEM CARRIER AGGREGATION SYSTEM
MÉTHODES ET APPAREILS DE REMPLACEMENT D'UNE CELLULE PRIMAIRE DANS UN SYSTÈME D'AGRÉGATION DE PORTEUSES

(30) Priority: 11.08.2010 CN 201010251151
(43) Date of publication of application: 19.06.2013
(73) Proprietor: China Academy of Telecommunications Technology, Haidian District Beijing 100191 (CN)
(72) Inventor: LIANG, Jing, Beijing 100191 (CN); LI, Haitao, Beijing 100191 (CN)
(74) Representative: Nony
(86) International application number: PCT/CN2011/078266
(87) International publication number: WO 2012/019549

(56) References cited:
- WO-A1-2009/155480
- CN-A- 1 735 258
- CN-A- 101 472 305
- CN-A- 101 473 677
- LG ELECTRONICS INC: "Delta CC configuration at handover", 3GPP DRAFT; R2-103209 DELTA CC CONFIGURATION AT HANDOVER_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Montreal, Canada; 20100510, 4 May 2010 (2010-05-04), XP050423297, [retrieved on 2010-05-04]
- ERICSSON ET AL: "Management of Component Carriers", 3GPP DRAFT; R2-101999 CC MANAGEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Beijing, China; 20100412 - 20100416, 6 April 2010 (2010-04-06), XP050605059, [retrieved on 2010-04-06]
- NOKIA CORPORATION ET AL: "Delta signalling in CC configuration messages", 3GPP DRAFT; R2-102884, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Montreal, Canada; 20100510, 4 May 2010 (2010-05-04), XP050423178, [retrieved on 2010-05-04]
- ALCATEL-LUCENT ET AL: "Usage of Cell Index for CC Management", 3GPP DRAFT; R2-103855 CELLINDEXUSAGE_V0.1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628, 22 June 2010 (2010-06-22), XP050451261, [retrieved on 2010-06-22]
- CATT: "Cell Configuration during HO", 3GPP DRAFT; R2-104510, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Madrid, Spain; 20100823, 16 August 2010 (2010-08-16), XP050451703, [retrieved on 2010-08-16]

## Description

This application claims the benefit of Chinese Patent Application No. 201010251151.6, filed with the Chinese Patent Office on August 11, 2010 and entitled "Cell configuration method and apparatus for changing primary cell".

### Field

The present invention relates to the field of communications and particularly to a cell configuration method and apparatus for changing a primary cell.

### Background

There is only one carrier in a cell in Long Term Evolution (LTE) and earlier radio communication systems, and the maximum bandwidth in the LTE system is 20MHz. A Long Term Evolution-Advanced (LTE-A) system has been proposed in the industry for an improved transmission bandwidth.

Peak rates of the LTE-A system, which requires 1Gbps in the downlink and 500Mbps in the uplink, are greatly improved than that of the LTE system. In the LTE-A system, the required peak rates can not be reached by using only one carrier with the maximum bandwidth of 20MHz. Thus the LTE-A system has to extend a bandwidth available to a user equipment, and to this end, Carrier Aggregation (CA) has been introduced, that is, a plurality of consecutive or inconsecutive carriers under the same Evolved NodeB (eNB) are aggregated together to serve a User Equipment (UE) concurrently, thereby providing the required rates. These carriers aggregated together are also referred to as Component Carriers (CCs). Each cell can be a component carrier, and cells (component carriers) under different eNB cannot be aggregated. The concepts of a primary cell (Pcell) and a secondary (Scell) have been defined among a plurality of cells aggregated for a UE and correspond respectively to a primary carrier cell and a secondary carrier cell currently aggregated for the UE.
WO 2009/155480 A1 patent application discloses a method and apparatus for implementing serving cell change in a multi-cell wireless transmit receive unit (WTRU). Serving cell information is received and stored by the WTRU to preconfigure a primary and secondary serving cell of an added cell to an active set. At least one of the preconfigured primary and secondary serving cells are monitored for a handover indication. Serving cell change is to the primary and secondary serving cells us performed using the preconfigured serving cell information upon receipt of a handover indication.

The LTE system is a single-carrier system and involves configuration of only one target cell during handover. The LTE-A system involves handover of a plurality of cells including a primary carrier cell and a secondary carrier cell and can not directly continue the use of a handover process of the LTE system, and an effective solution to a handover process in the LTE-A system has been absent so far.

### Summary

Embodiments of the invention provide a cell configuration method and apparatus for changing a primary cell to enable change of a primary cell in a carrier aggregation system.

A cell configuration method for changing a primary cell, applicable to the UE side, includes:
a User Equipment, UE, obtaining configuration information of a primary cell and a secondary cell(s) from a primary cell change command; and
the UE obtaining configuration information of a target primary cell and a target secondary cell(s) from the obtained configuration information of the primary cell and the secondary cell(s) in combination with stored configuration information of a source primary cell and a source secondary cell(s) and changing from the source primary cell and the source secondary cell(s) to the target primary cell and the target secondary cell(s);
   primary cell handover may be handover in a base station or across base stations; in a case of handover in a base station, then the UE receives a primary cell change command sent by a base station; in a case of handover across base stations, then the UE receives a primary cell change command sent by a target base station; the primary cell change command is generated by the target base station according to the configuration information of a source primary cell and/or a source secondary cell sent by a source base station.

A cell configuration method for changing a primary cell, applicable to the base station side to instruct a UE to update cells, includes:
a base station generating a primary cell change command including configuration information of a primary cell; and
the base station transmitting the primary cell change command to the User Equipment, UE, to instruct the UE to obtain configuration information of a target primary cell and a target secondary cell(s) from the configuration information of the primary cell and a secondary cell(s) carried in the primary cell change command in combination with stored configuration information of all of a source primary cell and a source secondary cell(s) and to change from the source primary cell and the source secondary cell(s) to the target primary cell and the target secondary cell(s);
   primary cell handover may be handover in a base station or across base stations; in a case of handover in a base station, then base station decides handover and generates the primary cell change command; in a case of handover across base stations, then the base station receives a handover request sent by a source base station, and generates a primary cell change command according to configuration information of a source primary cell and/or a source secondary cell carried in the handover request, wherein the base station for deciding handover is the source base station.

A user equipment includes:
an interface module configured to obtain configuration information of a primary cell and a secondary cell(s) from a primary cell change command; and
a configuration module configured to obtain configuration information of a target primary cell and a target secondary cell(s) from the obtained configuration information of the primary cell and the secondary cell(s) in combination with stored configuration information of all of a source primary cell and a source secondary cell(s) and to change from the source primary cell and the source secondary cell(s) to the target primary cell and the target secondary cell(s);
   primary cell handover may be handover in a base station or across base stations; in a case of handover in a base station, then the interface module is configured to receive a primary cell change command sent by a base station; in a case of handover across base stations, then the interface module is configured to receive a primary cell change command sent by a target base station; the primary cell change command is generated by the target base station according to the configuration information of a source primary cell and/or a source secondary cell sent by a source base station.

Abase station includes:
a control module configured to generate a primary cell change command including configuration information of a primary cell; and
an interface module configured to transmit the primary cell change command to a User Equipment, UE, to instruct the UE to obtain configuration information of a target primary cell and a target secondary cell(s) from the configuration information of the primary cell and a secondary cell(s) carried in the primary cell change command in combination with stored configuration information of all of a source primary cell and a source secondary cell(s) and to change from the source primary cell and the source secondary cell(s) to the target primary cell and the target secondary cell(s);
   primary cell handover may be handover in a base station or across base stations; in a case of handover in a base station, then the control module is configured to decide handover and generates the primary cell change command; in a case of handover across base stations, then the control module is configured to receive a handover request sent by a source base station, and generates a primary cell change command according to configuration information of a source primary cell and/or a source secondary cell carried in the handover request, wherein the base station for deciding handover is the source base station.

In the embodiments of the invention, a UE stores configuration information of a source primary cell and a source secondary cell(s) instead of deleting the configuration information of the source primary cell and the source secondary cell(s) immediately upon reception of a primary cell change command and then executes the primary cell change command by updating the stored configuration information of the source primary cell with configuration information of a primary cell carried in the primary cell change command and changing from the source primary cell to a target primary cell to thereby enable handover of the primary cell in an LTE-A system.

### Brief Description of the Drawings

Fig. 1 is a structural diagram of a communication system in an embodiment of the invention;
Fig. 2 is a general structural diagram of a UE in an embodiment of the invention;
Fig. 3 is a detailed structural diagram of a UE in an embodiment of the invention;
Fig. 4 is a structural diagram of a base station in an embodiment of the invention;
Fig. 5 is a flow chart of a method for cell handover at the UE side in an embodiment of the invention;
Fig. 6 is a flow chart of a method for cell handover at the base station side in an embodiment of the invention;
Fig. 7 is a flow chart of a cell configuration method for changing a primary cell when a primary cell change command includes a deletion instruction and an addition instruction and the deletion instruction and the addition instruction include the same cell index in an embodiment of the invention;
Fig. 8 is a flow chart of a cell configuration method for changing a primary cell when a primary cell change command includes a deletion instruction and an addition instruction and the deletion instruction and the addition instruction include different cell indexes in an embodiment of the invention;
Fig. 9 is a flow chart of a cell configuration method for changing a primary cell when a primary cell change command includes a change instruction and there is an unchanged correspondence relationship between a cell and a cell index in an embodiment of the invention;
Fig. 10 is a flow chart of a cell configuration method for changing a primary cell when a primary cell change command includes a change instruction and there is an unchanged correspondence relationship between a primary cell and a cell index in an embodiment of the invention; and
Fig. 11 is a flow chart of a cell configuration method for changing a primary cell across base stations in an embodiment of the invention.

### Detailed Description of the Embodiments

In an embodiment of the invention, a UE stores configuration information of a source primary cell and a source secondary cell(s) instead of deleting the configuration information of the source primary cell and source secondary cell(s) immediately upon reception of a primary cell change command and then executes the primary cell change command by updating the stored configuration information of the source primary cell with configuration information of a primary cell carried in the primary cell change command and changing from the source primary cell to a target primary cell to thereby enable handover of the primary cell in an LTE-A system.

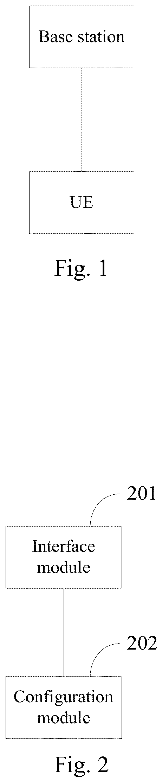

Referring to Fig. 1, a communication system in this embodiment includes a base station and a UE. The base station may be an eNB, a NodeB, etc.

The base station is configured to generate a primary cell change command including configuration information of a primary cell and to transmit the primary cell change command to the UE to instruct the UE to obtain configuration information of a target primary cell and a target secondary cell(s) from the configuration information of the primary cell and a secondary cell(s) carried in the primary cell change command in combination with stored configuration information of all of a source primary cell and a source secondary cell(s) and to change from the source primary cell and the source secondary cell(s) to the target primary cell and the target secondary cell(s).

The primary cell change command may be embodied in various forms, and handover of a primary cell and/or a secondary cell may be implemented in various ways, for example, the primary cell change command includes a deletion instruction (release or remove) and an addition instruction; and the base station transmits the primary cell change command to the UE to instruct the UE to delete a cell index included in the deletion instruction and configuration information corresponding to the cell index and to add a cell index included in the addition instruction and configuration information, carried in the primary cell change command, corresponding to the cell index. Particularly, when the deletion instruction and the addition instruction includes the same cell index, the base station transmits the primary cell change command to the UE to instruct the UE to firstly delete the cell index and the configuration information corresponding to the cell index in response to the deletion instruction and then add the cell index and the configuration information, carried in the primary cell change command, corresponding to the cell index in response to the addition instruction. Alternatively, for example, the primary cell change command includes a change instruction; and the base station transmits the primary cell change command to the UE to instruct the UE to delete configuration information corresponding to a cell index included in the change instruction and to add configuration information, carried in the primary cell change command, corresponding to the cell index. Particularly the configuration information of the primary cell and the secondary cell(s) carried in the primary cell change command is delta configuration information or full configuration information relative to the stored configuration information of the source primary cell. Alternatively the configuration information of the primary cell carried in the primary cell change command is delta configuration information or full configuration information relative to the stored configuration information of the source primary cell, and the configuration information of the secondary cell(s) carried in the primary cell change command is delta configuration information or full configuration information relative to the stored configuration information of the source secondary cell(s). The foregoing deletion instruction, addition instruction and change instruction may be used to only change a secondary cell(s). To change a primary cell, the primary cell change command may carry only a cell index and configuration information of the target primary cell but none of the corresponding deletion instruction, addition instruction and change instruction. The UE configures the target primary cell directly in response to the primary cell change command and then deletes the configuration information of the source primary cell (updates the configuration information) automatically.

The primary cell change command is a reconfiguration message (e.g., a Radio Resource Control (RRC) reconfiguration message); or the primary cell change command is a handover command.

A cell index may be at a UE level, that is, different UEs corresponding to the same cell may be provided with different cell indexes. At present, the number of cells that can be aggregated for a UE is 5, and 3 bits may suffice to represent a cell index.

Full configuration refers to that the base station transmits full configuration information to the UE in dedicated signaling, and the UE enables the configuration directly; and delta configuration refers to that both the UE and the base station stores the same set of old configuration internally, and then the base station transmits parameters different from the old configuration to the UE in dedicated signaling, and the UE enables directly the new configuration transmitted from the base station while continuing the use of or releasing the old configuration (and corresponding functions) for those parameters absent in the signaling. With the delta configuration scheme, the size of the dedicated signaling can be reduced and an overhead of the signaling can be lowered.

Configuration information of a cell as a primary cell includes at least one of the following parameters: a relevant parameter of a Physical Uplink Control Channel (PUCCH), e.g., an Schedule Request (SR) resource; a relevant parameter of Semi-Persistent Scheduling (SPS), e.g., SPS resource configuration; a relevant parameter of a periodical Channel Quality Indicator (CQI); a relevant parameter of a random access, e.g., allocation of a random access preamble; a relevant parameter of a radio link failure, e.g., a relevant counter and the length of the counter; a part of parameters in system information, e.g., the cycle of the system information, the size of a reception window of the system information, a Tracking Area Index (TAI), etc.; and the configuration information of the primary cell can further include other parameters which will not be enumerated here.

Configuration information of a cell as a secondary cell includes an inactivated timer, etc. The configuration information of the secondary cell can further include other parameters which will not be enumerated here.

The UE is configured to store instead of deleting immediately the configuration information of the source primary cell and the source secondary cell(s) upon reception of the primary cell change command, and then the UE obtains the configuration information of the target primary cell and the target secondary cell(s) from the configuration information of the primary cell and the secondary cell(s) carried in the primary cell change command in combination with the stored configuration information of all of the source primary cell and the source secondary cell(s) and changes from the source primary cell and the source secondary cell(s) to the target primary cell and the target secondary cell(s). The primary cell change command may be embodied in various forms, and a primary and/or secondary cell handover may be implemented in various ways, for example, the primary cell change command includes a deletion instruction and an addition instruction; and the UE deletes a cell index included in the deletion instruction and configuration information corresponding to the cell index and adds a cell index included in the addition instruction and configuration information, carried in the primary cell change command, corresponding to the cell index. Particularly, when the deletion instruction and the addition instruction includes the same cell index, the UE firstly deletes the cell index and the configuration information corresponding to the cell index in response to the deletion instruction and then adds the cell index and the configuration information, carried in the primary cell change command, corresponding to the cell index in response to the addition instruction. Alternatively, for example, the primary cell change command includes a change instruction; and the UE deletes configuration information corresponding to a cell index included in the change instruction and adds configuration information, carried in the primary cell change command, corresponding to the cell index. The UE fetches system information of the target cell after updating the configuration information to thereby finish handover. The foregoing deletion instruction, addition instruction and change instruction can be used to only change a secondary cell(s). To change a primary cell, the primary cell change command may carry only a cell index and configuration information of a target primary cell but none of the corresponding deletion instruction, addition instruction and change instruction. The UE configures the target primary cell directly in response to the primary cell change command and then deletes configuration information of a source primary cell (updates the configuration information) automatically.

Primary cell handover may be handover in a base station or across base stations. In the case of handover in a base station, then the same base station both decides handover and generates the primary cell change command. In the case of handover across base stations, then a source base station decides handover and transmits to a target base station a handover request carrying configuration information of a source primary cell and/or a source secondary cell(s), and the target base station generates a primary cell change command and transmits the primary cell change command to the UE via the source base station. In the case of handover across base stations, the UE fetches system information of the target cell to thereby establish a connection with the target base station and finish handover.

Referring to Fig. 2, a UE in this embodiment includes an interface module 201 and a configuration module 202. The interface module 201 may include a transceiver and other devices. The configuration module 202 may be embodied in various executable devices.

The interface module 201 is configured to receive and parse a primary cell change command and to obtain configuration information of a primary cell and a secondary cell(s) carried therein from the primary cell change command. The interface module 201 is further configured to fetch system information of a target cell, etc. The interface module 201 may further receive and transmit other messages.

The configuration module 202 is connected with the interface module 201 and configured to obtain configuration information of a target primary cell and a target secondary cell(s) from the configuration information of the primary cell and the secondary cell(s) carried in the primary cell change command in combination with stored configuration information of all of a source primary cell and a source secondary cell(s) and to change from the source primary cell and the source secondary cell(s) to the target primary cell and the target secondary cell(s). When the primary cell change command includes a deletion instruction and an addition instruction, the configuration module 202 deletes a cell index included in the deletion instruction and configuration information corresponding to the cell index and adds a cell index included in the addition instruction and configuration information, carried in the primary cell change command, corresponding to the cell index. Particularly, when the deletion instruction and the addition instruction includes the same cell index, the configuration module 202 firstly deletes the cell index and the configuration information corresponding to the cell index in response to the deletion instruction and then adds the cell index and the configuration information, carried in the primary cell change command, corresponding to the cell index in response to the addition instruction. When the primary cell change command includes a change instruction, the configuration module 202 deletes configuration information corresponding to a cell index included in the change instruction and adds configuration information, carried in the primary cell change command, corresponding to the cell index.

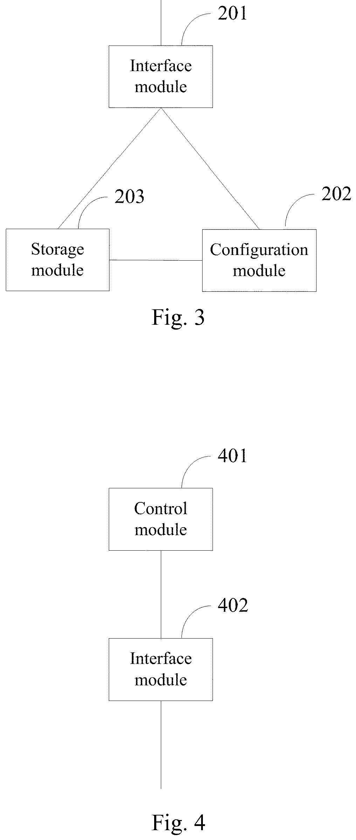

Referring to Fig. 3, the UE further includes a storage module 203 which can be embodied in various storage mediums. The storage module 203 is configured to save the configuration information of the source primary cell and the source secondary cell(s), etc.

Referring to Fig. 4, a base station in this embodiment includes a control module 401 and an interface module 402. The control module 401 can be embodied in various executable devices. The interface module 402 can be embodied in a transmitter and a receiver, etc.

The control module 401 is configured to generate a primary cell change command including configuration information of a primary cell. The control module 401 is further configured to make a handover decision.

The interface module 402 is configured to transmit the primary cell change command to a UE to instruct the UE to obtain configuration information of a target primary cell and a target secondary cell(s) from the configuration information of the primary cell and a secondary cell(s) carried in the primary cell change command in combination with stored configuration information of all of a source primary cell and a source secondary cell(s) and to change from the source primary cell and the source secondary cell(s) to the target primary cell and the target secondary cell(s). When the primary cell change command generated by the control module 401 includes a deletion instruction and an addition instruction; the interface module 402 transmits the primary cell change command to the UE to instruct the UE to delete a cell index included in the deletion instruction and configuration information corresponding to the cell index and to add a cell index included in the addition instruction and configuration information, carried in the primary cell change command, corresponding to the cell index. Particularly, when the deletion instruction and the addition instruction includes the same cell index, the interface module 402 transmits the primary cell change command to the UE to instruct the UE to firstly delete the cell index and the configuration information corresponding to the cell index in response to the deletion instruction and then add the cell index and the configuration information, carried in the primary cell change command, corresponding to the cell index in response to the addition instruction. When the primary cell change command generated by the control module 401 includes a change instruction, the interface module 402 transmits the primary cell change command to the UE to instruct the UE to delete configuration information corresponding to a cell index included in the change instruction and to add configuration information, carried in the primary cell change command, corresponding to the cell index. The interface module 402 is further configured to transmit and receive a handover request.

The base station includes all of functions of being a source base station and a target base station and it plays of different roles in different scenarios.

The internal structures and functions of the communication system, the base station and the UE have been described above, and a process of cell handover will be described below.

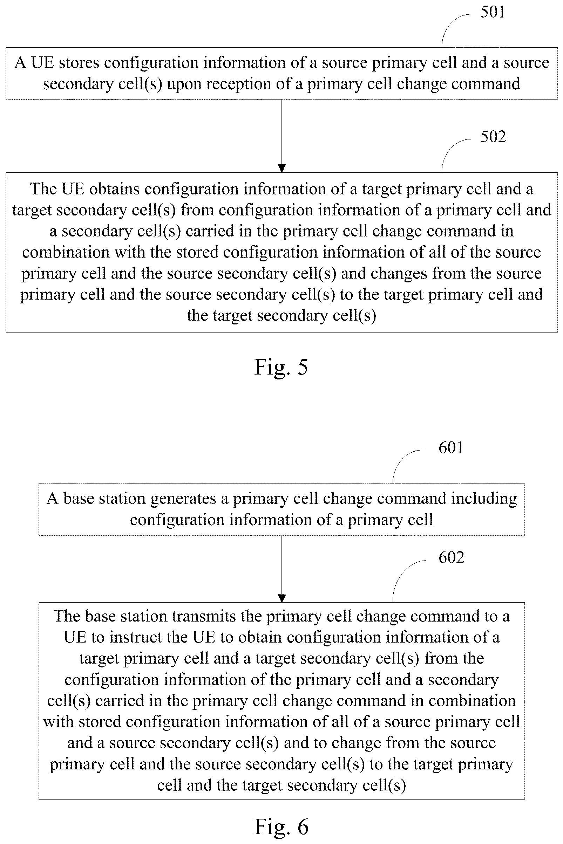

Referring to Fig. 5, a flow chart of a method for cell handover at the UE side in this embodiment is as follows:
Operation 501: A UE stores configuration information of a source primary cell and a source secondary cell(s) upon reception of a primary cell change command.
Operation 502: The UE obtains configuration information of a target primary cell and a target secondary cell(s) from configuration information of a primary cell and a secondary cell(s) carried in the primary cell change command in combination with the stored configuration information of all of the source primary cell and the source secondary cell(s) and changes from the source primary cell and the source secondary cell(s) to the target primary cell and the target secondary cell(s).

Referring to Fig. 6, a flow chart of a method for cell handover at the base station side in this embodiment is as follows:
Operation 601: A base station generates a primary cell change command including configuration information of a primary cell.
Operation 602: The base station transmits the primary cell change command to a UE to instruct the UE to obtain configuration information of a target primary cell and a target secondary cell(s) from the configuration information of the primary cell and a secondary cell(s) carried in the primary cell change command in combination with stored configuration information of all of a source primary cell and a source secondary cell(s) and to change from the source primary cell and the source secondary cell(s) to the target primary cell and the target secondary cell(s).

There are various forms of the primary cell change command and correspondingly various ways of performing cell handover including handover in a base station and handover across base stations, a process of which will be detailed below in several embodiments.

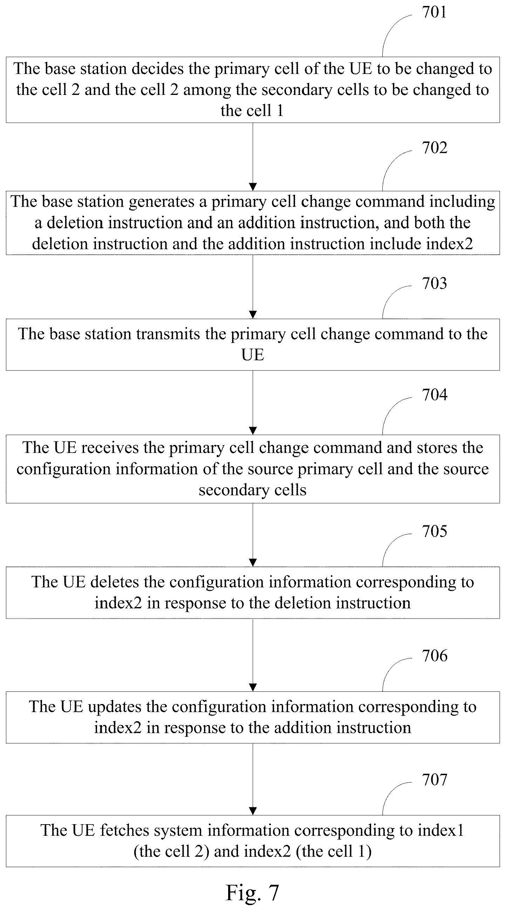

Referring to Fig. 7, a flow chart of a cell configuration method for changing a primary cell is as follows when a primary cell change command includes a deletion instruction and an addition instruction and the deletion instruction and the addition instruction include the same cell index in this embodiment:

For example, cells under a base station include a cell 1, a cell 2, a cell 3 and a cell 4, and cells aggregated for a UE includes the cell 1, the cell 2 and the cell 3 with corresponding cell indexes referring to as index1, index2 and index 3, where a primary cell is the cell 1. The primary cell is the cell 2, and secondary cells include the cell 1 and the cell 3 after handover.

Operation 701: The base station decides the primary cell of the UE to be changed to the cell 2 and the cell 2 among the secondary cells to be changed to the cell 1, which is equivalent to changing-over of the primary and secondary cells. Particularly the base station may make the decision according to a measurement report from the UE.

Operation 702: The base station generates a primary cell change command including a deletion instruction and an addition instruction, and both the deletion instruction and the addition instruction include index2. The addition instruction in the primary cell change command further includes configuration information of the target cell corresponding to index2. The primary cell change command further includes index1 and configuration information of the target primary cell corresponding to index1. The UE can determine from the configuration information which index corresponds to the primary cell. The configuration information of the primary cell and the secondary cell may be delta configuration information or full configuration information relative to configuration information of the source primary cell; or the configuration information of the target cell corresponding to index1 is delta configuration information or full configuration information relative to the configuration information of the source primary cell, and the configuration information of the target cell corresponding to index2 is delta configuration information or full configuration information relative to configuration information of the source secondary cell(s) (the cell 2 and/or the cell 3).

Operation 703: The base station transmits the primary cell change command to the UE.

Operation 704: The UE receives the primary cell change command and stores the configuration information of the source primary cell and the source secondary cells.

Operation 705: The UE deletes the configuration information corresponding to index2 in response to the deletion instruction, which is equivalent to deletion of configuration information of the cell 2 (the source secondary cell).

Operation 706: The UE updates the configuration information corresponding to index2 in response to the addition instruction, which is equivalent to addition of the configuration information of the cell 2 (the target primary cell), and also updates the configuration information of the target primary cell corresponding to index1 and deletes the configuration information of the source primary cell (updates the configuration information).

For the cell 3, the target secondary cell and the source secondary cell are the same cell, and the UE continues the use of the stored configuration information.

Operation 707: The UE fetches system information corresponding to index1 (the cell 2) and index2 (the cell 1) to thereby finish changing of the cells.

In this embodiment, the cell index corresponding to the primary cell is unchanged before and after changing, but the correspondence relationship between the cell and the cell index is changed.

In this embodiment, the secondary cell can alternatively be changed from the cell 2 to the cell 4 simply by carrying configuration information of the cell 4 in the addition instruction.

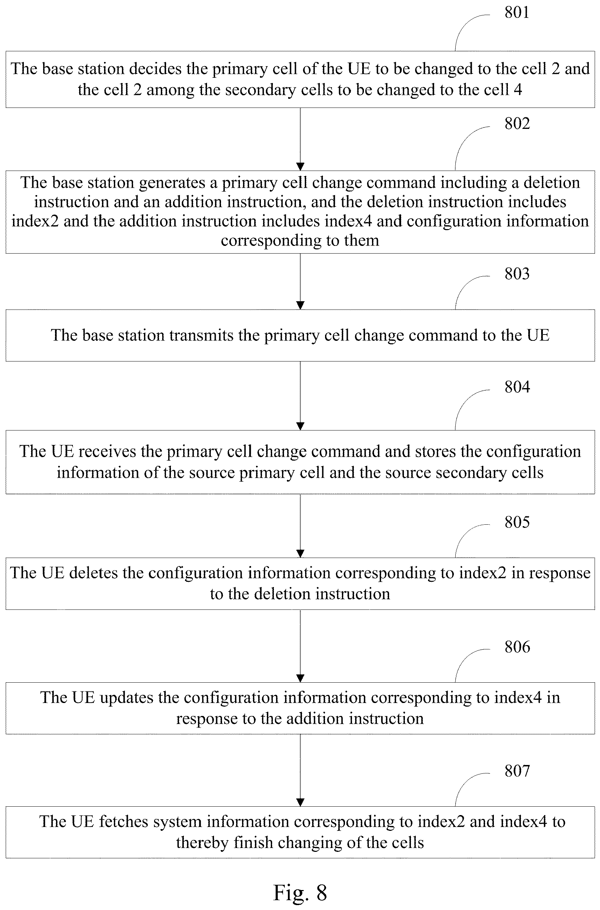

Referring to Fig. 8, a flow chart of a cell configuration method for changing a primary cell is as follows when a primary cell change command includes a deletion instruction and an addition instruction and the deletion instruction and the addition instruction include different cell indexes in this embodiment:

For example, cells under a base station include a cell 1, a cell 2, a cell 3 and a cell 4, and cells aggregated for a UE includes the cell 1, the cell 2 and the cell 3 with corresponding cell indexes referring to as index1, index2 and index 3, where a primary cell is the cell 1. The primary cell is the cell 2, and secondary cells include the cell 3 and the cell 4 after changing.

Operation 801: The base station decides the primary cell of the UE to be changed to the cell 2 and the cell 2 among the secondary cells to be changed to the cell 4.

Operation 802: The base station generates a primary cell change command including a deletion instruction and an addition instruction, and the deletion instruction includes index2 and the addition instruction includes index4 and configuration information corresponding to them. Particularly the addition instruction indicates that index2 corresponds to the target primary cell and can further indicate that index 4 corresponds to the target secondary cell. Instead of the indication, for example, command combination is adopted so that index2 is deleted and index4 is added, which is equivalent to changing from the cell 2 corresponding to index2 to the cell 4 corresponding to index4, and since index2 corresponds to the secondary cell before changing, index4 also corresponds to the secondary cell after changing; or it can be known from the carried configuration information which cell is the primary cell and which cell is the secondary cell(s). The addition instruction in the primary cell change command further includes the configuration information of the target cell corresponding to index4. The primary cell change command further includes index2 and the configuration information of the target primary cell corresponding to index2, which is equivalent to changing from the cell 1 corresponding to index1 to the cell 2 corresponding to index2.

Operation 803: The base station transmits the primary cell change command to the UE.

Operation 804: The UE receives the primary cell change command and stores the configuration information of the source primary cell and the source secondary cells.

Operation 805: The UE deletes the configuration information corresponding to index2 in response to the deletion instruction, which is equivalent to deletion of configuration information of the cell 2 (the source secondary cell).

Operation 806: The UE updates the configuration information corresponding to index4 in response to the addition instruction, which is equivalent to addition of configuration information of the cell 4 (the target secondary cell). This operation and the operation 805 can be performed in a reversed order.

The UE also updates the configuration information of the target primary cell corresponding to index2 and deletes the configuration information of the source primary cell (updates the configuration information).

For the cell 3, the UE continues the use of the stored configuration information.

Operation 807: The UE fetches system information corresponding to index2 (the cell 2) and index4 (the cell 4) to thereby finish changing of the cells.

In this embodiment, the cell index corresponding to the primary cell is changed before and after changing, but the correspondence relationship between the cell and the cell index is unchanged.

The secondary cell can also be changed from the cell 2 to the cell 1 in the method illustrated in Fig. 8 simply by changing index4 to index1 and carrying configuration information of the cell 1.

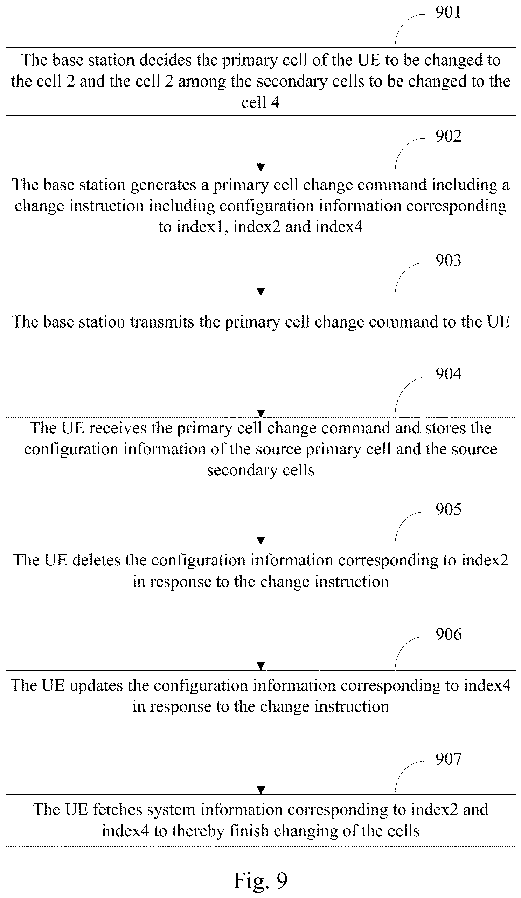

Referring to Fig. 9, a flow chart of a cell configuration method for changing a primary cell is as follows when a primary cell change command includes a change instruction and there is an unchanged correspondence relationship between a cell and a cell index in this embodiment:

For example, cells under a base station include a cell 1, a cell 2, a cell 3 and a cell 4, and cells aggregated for a UE includes the cell 1, the cell 2 and the cell 3 with corresponding cell indexes referring to as index1, index2 and index 3, where a primary cell is the cell 1. The primary cell is the cell 2, and secondary cells include the cell 3 and the cell 4 after changing.

Operation 901: The base station decides the primary cell of the UE to be changed to the cell 2 and the cell 2 among the secondary cells to be changed to the cell 4.

Operation 902: The base station generates a primary cell change command including a change instruction including configuration information corresponding to index1, index2 and index4.

Operation 903: The base station transmits the primary cell change command to the UE.

Operation 904: The UE receives the primary cell change command and stores the configuration information of the source primary cell and the source secondary cells.

Operation 905: The UE deletes the configuration information corresponding to index2 in response to the change instruction, which is equivalent to deletion of configuration information of the cell 2 (the source secondary cell). Particularly it is not necessary to perform any deletion operation with respect to index4 because the configuration information corresponding to index4 is not stored in the UE.

Operation 906: The UE updates the configuration information corresponding to index4 in response to the change instruction, which is equivalent to addition of configuration information of the cell 4 (the target secondary cell). The UE also updates the configuration information of the target primary cell corresponding to index2 and deletes the configuration information of the source primary cell (updates the configuration information).

This operation and the operation 905 can be performed in a reversed order.

The operation 905 and the operation 906 can also be combined, for example, the change instruction includes the configuration information corresponding to index2 and index4. The UE updates local configuration information on index4 being null with the configuration information corresponding to index4 (the configuration information of the target secondary cell), which is equivalent to addition of the cell 4 as the secondary cell. The UE updates local configuration information on index1 with the configuration information of the target primary cell corresponding to index2, which is equivalent to changing of the primary cell from the cell 1 to the cell 2, and then the UE deletes the original configuration information of the cell 1 and the cell 2 (updates the configuration information) automatically.

For the cell 3, the UE continues the use of the stored configuration information.

Operation 907: The UE fetches system information corresponding to index2 (the cell 2) and index4 (the cell 4) to thereby finish changing of the cells.

In this embodiment, the cell index corresponding to the primary cell is changed before and after changing, but the correspondence relationship between the cell and the cell index keeps unchanged.

The secondary cell can also be changed from the cell 2 to the cell 1 in the method illustrated in Fig. 9 simply by changing index4 to index1 and carrying configuration information corresponding to the cell 1.

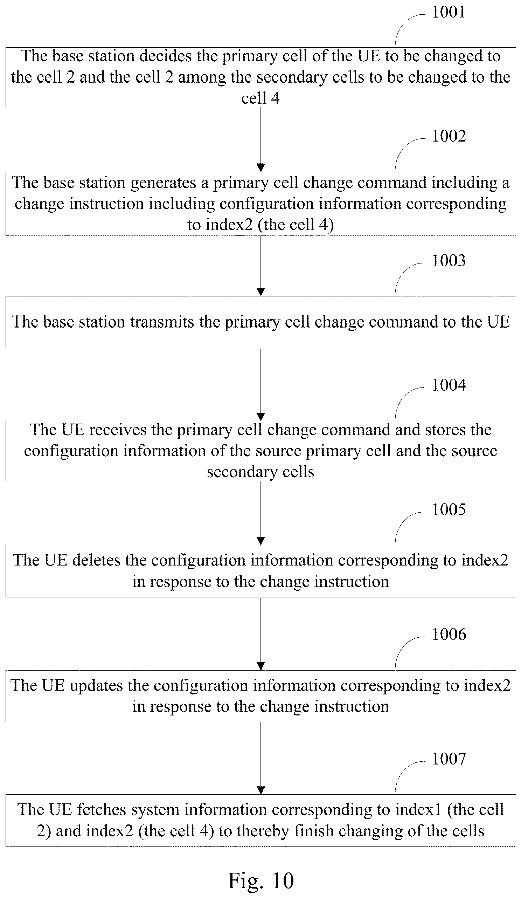

Referring to Fig. 10, a flow chart of a cell configuration method for changing a primary cell is as follows when a primary cell change command includes a change instruction and there is an unchanged correspondence relationship between a primary cell and a cell index in this embodiment:

For example, cells under a base station include a cell 1, a cell 2, a cell 3 and a cell 4, and cells aggregated for a UE includes the cell 1, the cell 2 and the cell 3 with corresponding cell indexes referring to as index1, index2 and index 3, where a primary cell is the cell 1. The primary cell is the cell 2, and secondary cells include the cell 3 and the cell 4 (index 4) after changing.

Operation 1001: The base station decides the primary cell of the UE to be changed to the cell 2 and the cell 2 among the secondary cells to be changed to the cell 4.

Operation 1002: The base station generates a primary cell change command including a change instruction including configuration information corresponding to index2 (the cell 4), and the primary cell change command further includes index1 (the cell 2) and configuration information corresponding to index1 (the cell 2).

In this embodiment, the cell index corresponding to the primary cell is unchanged, but the cell index corresponding to the secondary cell can also be unchanged before and after changing.

Operation 1003: The base station transmits the primary cell change command to the UE.

Operation 1004: The UE receives the primary cell change command and stores the configuration information of the source primary cell and the source secondary cells.

Operation 1005: The UE deletes the configuration information corresponding to index2 in response to the change instruction, which is equivalent to deletion of configuration information of the cell 2 (the source secondary cell).

Operation 1006: The UE updates the configuration information corresponding to index2 in response to the change instruction, which is equivalent to addition of configuration information of the cell 4 (the target secondary cell). The UE updates local configuration information on index1 with the configuration information of the target primary cell corresponding to index1 (the cell 2), which is equivalent to changing of the primary cell from the cell 1 to the cell 2, and then the UE deletes the original configuration information of the cell 1 and the cell 2 (updates the configuration information) automatically.

This operation and the operation 1005 can be performed in a reversed order.

The operation 1005 and the operation 1006 can also be combined, for example, the change instruction includes the configuration information corresponding to index1 and index2. The UE updates stored configuration information corresponding to index1 (the cell 1) with the configuration information corresponding to index1, which is equivalent to deletion of the cell 1 and addition of configuration of the cell 2, thereby changing the primary cell from the cell 1 to the cell 2. The UE updates stored configuration information corresponding to index2 with the configuration information corresponding to index2, which is equivalent to deletion of the cell 2 and addition of configuration of the cell 4, thereby changing the secondary cell from the cell 2 to the cell 4.

For the cell 3, the UE continues the use of the stored configuration information.

Operation 1007: The UE fetches system information corresponding to index1 (the cell 2) and index2 (the cell 4) to thereby finish changing of the cells.

In this embodiment, the cell index corresponding to the primary cell is unchanged before and after changing, but the correspondence relationship between the cell and the cell index is changed.

The secondary cell can also be changed from the cell 2 to the cell 1 in the method illustrated in Fig. 10 simply by changing the carried configuration information of the cell 4 to carried configuration information corresponding to the cell 1.

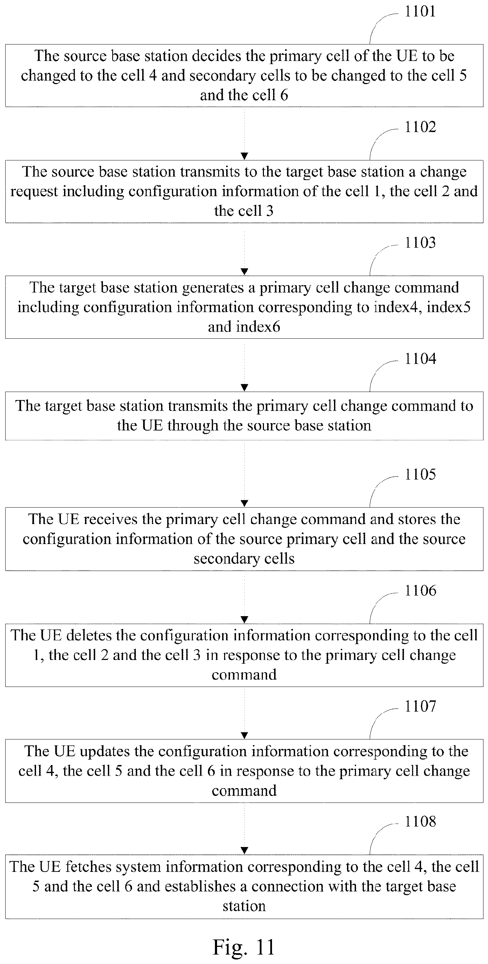

Referring to Fig. 11, a flow chart of a cell configuration method for changing a primary cell across base stations in this embodiment is as follows:

For example, cells under a source base station include a cell 1, a cell 2 and a cell 3, cells under a target base station include a cell 4, a cell 5 and a cell 6, and cells aggregated for a UE include the cell 1, the cell 2 and the cell 3 with corresponding cell indexes referring to as index1, index2 and index 3, where a primary cell is the cell 1. The cells aggregated for the UE include the cell 4, the cell 5 and the cell 6 with corresponding cell indexes referring to as index4, index5 and index6, and the primary cell is the cell 4 after changing.

Operation 1101: The source base station decides the primary cell of the UE to be changed to the cell 4 and secondary cells to be changed to the cell 5 and the cell 6.

Operation 1102: The source base station transmits to the target base station a change request including configuration information of the cell 1, the cell 2 and the cell 3 (equivalent to the source primary cell and all the source secondary cells).

Operation 1103: The target base station generates a primary cell change command including configuration information corresponding to index4, index5 and index6, that is, configuration information of the cell 4, the cell 5 and the cell 6.

In this embodiment, the primary cell change command may alternatively still carry the cell indexes of index1, index2 and index3 as long as index1, index2 and index3 correspond to the configuration information of the cell 4, the cell 5 and the cell 6.

The primary cell change command may include a deletion instruction and an addition instruction, for example, a deletion instruction with index2 and an addition instruction with index5, a deletion instruction with index3 and an addition instruction with index6, etc.

Alternatively the primary cell change command includes a change instruction, for example, a change instruction with index2 and index3 and carrying the configuration information of the cell 4, the cell 5 and the cell 6. The correspondence relationship between the primary cell and the cell index is unchanged, or the correspondence relationships between the cells and the cell indexes are unchanged. Reference can be made to the flows illustrated in Fig. 7 to Fig. 10 for details.

Operation 1104: The target base station transmits the primary cell change command to the UE through the source base station.

Operation 1105: The UE receives the primary cell change command and stores the configuration information of the source primary cell and the source secondary cells.

Operation 1106: The UE deletes the configuration information corresponding to the cell 1, the cell 2 and the cell 3 in response to the primary cell change command, which is equivalent to deletion of the configuration information of the source primary cell and the source secondary cells.

Operation 1107: The UE updates the configuration information corresponding to the cell 4, the cell 5 and the cell 6 in response to the primary cell change command, which is equivalent to addition of configuration information of the target primary cell and the target secondary cells. This operation and the operation 1106 can be performed in a reversed order.

If the primary cell change command includes the change instruction, then the operation 1106 and the operation 1107 can also be combined.

Operation 1108: The UE fetches system information corresponding to the cell 4, the cell 5 and the cell 6 and establishes a connection with the target base station to thereby finish changing of the cells.

In an embodiment of the invention, a UE stores configuration information of a source primary cell and source secondary cells instead of deleting the configuration information of the source primary cell and the source secondary cells immediately upon reception of a primary cell change command and then executes the primary cell change command by updating the stored configuration information of the source primary cell with configuration information of a primary cell carried in the primary cell change command and changing from the source primary cell to a target primary cell to thereby enable changing of the primary cell in an LTE-A system without performing the existing handover process. The primary cell change command in the embodiment of the invention can be a reconfiguration message or a handover command, and the carried configuration information can be delta configuration information or full configuration information. And in the embodiment of the invention, the configuration information can be updated by combining a deletion instruction and an addition instruction or by a change instruction to thereby change the cells, and such a variety of implementations can accommodate needs of different scenarios and change a primary and/or secondary cell(s) more flexibly.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide operations for performing the functions specified in the flow(s) of the flow chart and/or the block(s) of the block diagram.

Evidently those skilled in the art can make various modifications and variations to the invention without departing from the scope of the invention. Thus the invention is also intended to encompass these modifications and variations thereto so long as the modifications and variations come into the scope of the claims appended to the invention and their equivalents.

## Claims

1. A cell configuration method for changing a primary cell, comprising:
a User Equipment, UE, obtaining (501) configuration information of a primary cell and a secondary cell from a primary cell change command; and
the UE obtaining (502) configuration information of a target primary cell and a target secondary cell from the obtained configuration information of the primary cell and the secondary cell in combination with stored configuration information of a source primary cell and a source secondary cell and changing from the source primary cell and the source secondary cell to the target primary cell and the target secondary cell;
primary cell handover may be handover in a base station or across base stations; in a case of handover in a base station, then the UE receives a primary cell change command sent by a base station; in a case of handover across base stations, then the UE receives a primary cell change command sent by a target base station; the primary cell change command is generated by the target base station according to the configuration information of a source primary cell and/or a source secondary cell sent by a source base station.

2. The method according to claim 1, wherein the primary cell change command comprises a deletion instruction and an addition instruction; and
the UE updating the stored configuration information of the source secondary cell with the configuration information of the secondary cell carried in the primary cell change command comprises: the UE deleting a cell index of a secondary cell comprised in the deletion instruction and configuration information corresponding to the cell index, and adding a cell index of a secondary cell comprised in the addition instruction and carried configuration information corresponding to the cell index.

3. The method according to claim 2, wherein when the deletion instruction and the addition instruction comprises the same cell index, the UE firstly deletes the cell index and the configuration information corresponding to the cell index in response to the deletion instruction, and then adds the cell index and the carried configuration information corresponding to the cell index in response to the addition instruction.

4. The method according to any one of claims 1 to 3, wherein the configuration information of the primary cell and the secondary cell carried in the primary cell change command is delta configuration information or full configuration information relative to the stored configuration information of the source primary cell; or
the configuration information of the primary cell carried in the primary cell change command is delta configuration information or full configuration information relative to the stored configuration information of the source primary cell; and the configuration information of the secondary cell carried in the primary cell change command is delta configuration information or full configuration information relative to the stored configuration information of the source secondary cell.

5. A cell configuration method for changing a primary cell, comprising:
a base station generating (601) a primary cell change command comprising configuration information of a primary cell; and
the base station transmitting (602) the primary cell change command to a User Equipment, UE, to instruct the UE to obtain configuration information of a target primary cell and a target secondary cell from the configuration information of the primary cell and a secondary cell carried in the primary cell change command in combination with stored configuration information of all of a source primary cell and a source secondary cell and to change from the source primary cell and the source secondary cell to the target primary cell and the target secondary cell;
primary cell handover may be handover in a base station or across base stations; in a case of handover in a base station, then base station decides handover and generates the primary cell change command; in a case of handover across base stations, then the base station receives a handover request sent by a source base station, and generates a primary cell change command according to configuration information of a source primary cell and/or a source secondary cell carried in the handover request, wherein the base station for deciding handover is the source base station.

6. The method according to claim 5, wherein the primary cell change command comprises a deletion instruction and an addition instruction; and
the base station transmitting the primary cell change command to the UE comprises: the base station transmitting the primary cell change command to the UE to instruct the UE to delete a cell index of a secondary cell comprised in the deletion instruction and configuration information corresponding to the cell index, and to add a cell index of a secondary cell comprised in the addition instruction and configuration information, carried in the primary cell change command, corresponding to the cell index.

7. The method according to claim 6, wherein when the deletion instruction and the addition instruction comprises the same cell index, the base station transmitting the primary cell change command to the UE comprises: the base station transmitting the primary cell change command to the UE to instruct the UE to firstly delete the cell index and the configuration information corresponding to the cell index in response to the deletion instruction and then add the cell index and the configuration information, carried in the primary cell change command, corresponding to the cell index in response to the addition instruction.

8. The method according to any one of claims 5 to 7, wherein the configuration information of the primary cell and the secondary cell carried in the primary cell change command is delta configuration information or full configuration information relative to the stored configuration information of the source primary cell; or
the configuration information of the primary cell carried in the primary cell change command is delta configuration information or full configuration information relative to the stored configuration information of the source primary cell; and the configuration information of the secondary cell carried in the primary cell change command is delta configuration information or full configuration information relative to the stored configuration information of the source secondary cell.

9. A user equipment, comprising:
an interface module (201) configured to obtain configuration information of a primary cell and a secondary cell from a primary cell change command; and
a configuration module (202) configured to obtain configuration information of a target primary cell and a target secondary cell from the obtained configuration information of the primary cell and the secondary cell in combination with stored configuration information of all of a source primary cell and a source secondary cell and to change from the source primary cell and the source secondary cell to the target primary cell and the target secondary cell;
primary cell handover may be handover in a base station or across base stations; in a case of handover in a base station, then the interface module (201) is configured to receive a primary cell change command sent by a base station; in a case of handover across base stations, then the interface module (201) is configured to receive a primary cell change command sent by a target base station; the primary cell change command is generated by the target base station according to the configuration information of a source primary cell and/or a source secondary cell sent by a source base station.

10. The user equipment according to claim 9, wherein the primary cell change command comprises a deletion instruction and an addition instruction; and
the configuration module (202) deletes a cell index of a secondary cell comprised in the deletion instruction and configuration information corresponding to the cell index, and adds a cell index of a secondary cell comprised in the addition instruction and configuration information, carried in the primary cell change command, corresponding to the cell index.

11. The user equipment according to claim 10, wherein when the deletion instruction and the addition instruction comprises the same cell index, the configuration module (202) firstly deletes the cell index and the configuration information corresponding to the cell index in response to the deletion instruction and then adds the cell index and the configuration information, carried in the primary cell change command, corresponding to the cell index in response to the addition instruction.

12. The user equipment according to any one of claims 9 to 11, wherein the configuration information of the primary cell and the secondary cell carried in the primary cell change command is delta configuration information or full configuration information relative to the stored configuration information of the source primary cell; or
the configuration information of the primary cell carried in the primary cell change command is delta configuration information or full configuration information relative to the stored configuration information of the source primary cell; and the configuration information of the secondary cell carried in the primary cell change command is delta configuration information or full configuration information relative to the stored configuration information of the source secondary cell.

13. Abase station, comprising:
a control module (401) configured to generate a primary cell change command comprising configuration information of a primary cell; and
an interface module (402) configured to transmit the primary cell change command to a User Equipment, UE, to instruct the UE to obtain configuration information of a target primary cell and a target secondary cell from the configuration information of the primary cell and the secondary cell carried in the primary cell change command in combination with stored configuration information of all of a source primary cell and a source secondary cell and to change from the source primary cell and the source secondary cell to the target primary cell and the target secondary cell;
primary cell handover may be handover in a base station or across base stations; in a case of handover in a base station, then the control module (402) is configured to decide handover and generates the primary cell change command; in a case of handover across base stations, then the control module (402) is configured to receive a handover request sent by a source base station, and generates a primary cell change command according to configuration information of a source primary cell and/or a source secondary cell carried in the handover request, wherein the base station for deciding handover is the source base station.

14. The base station according to claim 13, wherein the primary cell change command comprises a deletion instruction and an addition instruction; and
the interface module (401) transmits the primary cell change command to the UE to instruct the UE to delete a cell index of a secondary cell comprised in the deletion instruction and configuration information corresponding to the cell index, and to add a cell index of a secondary cell comprised in the addition instruction and configuration information, carried in the primary cell change command, corresponding to the cell index.

15. The base station according to claim 14, wherein when the deletion instruction and the addition instruction comprises the same cell index, the interface module transmits the primary cell change command to the UE to instruct the UE to firstly delete the cell index and the configuration information corresponding to the cell index in response to the deletion instruction and then add the cell index and the configuration information, carried in the primary cell change command, corresponding to the cell index in response to the addition instruction.

## Patentansprüche

1. Zellenkonfigurationsverfahren zur Änderung einer Primärzelle, aufweisend:
ein Benutzerendgerät, UE, erhält (501) Konfigurationsinformationen einer Primärzelle und einer Sekundärzelle aus einem Primärzellen-Änderungsbefehl; und
das UE erhält (502) Konfigurationsinformationen einer Ziel-Primärzelle und einer Ziel-Sekundärzelle aus den erhaltenen Konfigurationsinformationen der Primärzelle und der Sekundärzelle in Kombination mit gespeicherten Konfigurationsinformationen einer Quell-Primärzelle und einer Quell-Sekundärzelle und wechselt von der Quell-Primärzelle und der Quell-Sekundärzelle zu der Ziel-Primärzelle und der Ziel-Sekundärzelle;
wobei die Primärzellen-Übergabe eine Übergabe in einer Basisstation oder über Basisstationen sein kann; in einem Fall einer Übergabe in einer Basisstation empfängt dann das UE einen Primärzellen-Änderungsbefehl, der von einer Basisstation gesendet wird; in einem Fall einer Übergabe über Basisstationen empfängt dann das UE einen Primärzellen-Änderungsbefehl, der von einer Zielbasisstation gesendet wird; der Primärzellen-Änderungsbefehl wird von der Ziel-Basisstation gemäß den Konfigurationsinformationen einer Quell-Primärzelle und/oder einer Quell-Sekundärzelle, die von einer Quell-Basisstation gesendet werden, erzeugt.

2. Verfahren nach Anspruch 1, wobei der Primärzellen-Änderungsbefehl eine Löschungsanweisung und eine Hinzufügungsanweisung aufweist; und
das Aktualisieren durch das UE der gespeicherten Konfigurationsinformationen der Quell-Sekundärzelle mit den in dem Primärzellen-Änderungsbefehl transportierten Konfigurationsinformationen der Sekundärzelle aufweist: das UE löscht einen Zellenindex einer Sekundärzelle, der in der Löschungsanweisung enthalten ist, und Konfigurationsinformationen, die dem Zellenindex entsprechen, und fügt einen Zellenindex einer Sekundärzelle, der in der Hinzufügungsanweisung enthalten ist, und transportierte Konfigurationsinformationen, die dem Zellenindex entsprechen, hinzu.

3. Verfahren nach Anspruch 2, wobei, wenn die Löschungsanweisung und die Hinzufügungsanweisung den gleichen Zellenindex aufweisen, das UE zuerst den Zellenindex und die Konfigurationsinformationen, die dem Zellenindex entsprechen, in Antwort auf die Löschungsanweisung löscht, und dann den Zellenindex und die transportierten Konfigurationsinformationen, die dem Zellenindex entsprechen, in Antwort auf die Hinzufügungsanweisung hinzufügt.

4. Verfahren nach einem der Ansprüche 1 bis 3, wobei die in dem Primärzellen-Änderungsbefehl transportierten Konfigurationsinformationen der Primärzelle und der Sekundärzelle Delta-Konfigurationsinformationen oder vollständige Konfigurationsinformationen in Bezug auf die gespeicherten Konfigurationsinformationen der Quell-Primärzelle sind; oder
die in dem Primärzellen-Änderungsbefehl transportierten Konfigurationsinformationen der Primärzelle Delta-Konfigurationsinformationen oder vollständige Konfigurationsinformationen in Bezug auf die gespeicherten Konfigurationsinformationen der Quell-Primärzelle sind; und die in dem Primärzellen-Änderungsbefehl transportierten Konfigurationsinformationen der Sekundärzelle Delta-Konfigurationsinformationen oder vollständige Konfigurationsinformationen in Bezug auf die gespeicherten Konfigurationsinformationen der Quell-Sekundärzelle sind.

5. Zellenkonfigurationsverfahren zur Änderung einer Primärzelle, aufweisend:
eine Basisstation erzeugt (601) einen Primärzellen-Änderungsbefehl, der Konfigurationsinformationen einer Primärzelle aufweist; und
die Basisstation überträgt (602) den Primärzellen-Änderungsbefehl an ein Benutzerendgerät (UE), um das UE anzuweisen, Konfigurationsinformationen einer Ziel-Primärzelle und einer Ziel-Sekundärzelle aus den in dem Primärzellen-Änderungsbefehl transportierten Konfigurationsinformationen der Primärzelle und einer Sekundärzelle in Kombination mit gespeicherten Konfigurationsinformationen aller von einer Quell-Primärzelle und einer Quell-Sekundärzelle zu erhalten und von der Quell-Primärzelle und der Quell-Sekundärzelle zu der Ziel-Primärzelle und der Ziel-Sekundärzelle zu wechseln;
wobei die Primärzellen-Übergabe eine Übergabe in einer Basisstation oder über Basisstationen sein kann; in einem Fall einer Übergabe in einer Basisstation entscheidet die Basisstation dann die Übergabe und erzeugt den Primärzellen-Änderungsbefehl; in einem Fall einer Übergabe über Basisstationen empfängt die Basisstation dann eine Übergabeanfrage, die von einer Quell-Basisstation gesendet wird, und erzeugt einen Primärzellen-Änderungsbefehl gemäß in der Übergabeanfrage transportierten Konfigurationsinformationen einer Quell-Primärzelle und/oder einer Quell-Sekundenzelle, wobei die zum Entscheiden der Übergabe vorgesehene Basisstation die Quell-Basisstation ist.

6. Verfahren nach Anspruch 5, wobei der Primärzellen-Änderungsbefehl eine Löschungsanweisung und eine Hinzufügungsanweisung aufweist; und
das Übertragen durch die Basisstation des Primärzellen-Änderungsbefehls an das UE aufweist: die Basisstation überträgt den Primärzellen-Änderungsbefehl an das UE, um das UE anzuweisen, einen Zellenindex einer Sekundärzelle, der in der Löschungsanweisung enthalten ist, und Konfigurationsinformationen, die dem Zellenindex entsprechen, zu löschen, und einen Zellenindex einer Sekundärzelle, der in der Hinzufügungsanweisung enthalten ist, und in dem Primärzellen-Änderungsbefehl transportierte Konfigurationsinformationen, die dem Zellenindex entsprechen, hinzuzufügen.

7. Verfahren nach Anspruch 6, wobei, wenn die Löschungsanweisung und die Hinzufügungsanweisung den gleichen Zellenindex aufweisen, das Übertragen durch die Basisstation des Primärzellen-Änderungsbefehls an das UE aufweist: die Basisstation überträgt den Primärzellen-Änderungsbefehl an das UE, um das UE anzuweisen, zuerst den Zellenindex und die Konfigurationsinformationen, die dem Zellenindex entsprechen, in Antwort auf die Löschungsanweisung zu löschen, und dann den Zellenindex und die in dem Primärzellen-Änderungsbefehl transportierten Konfigurationsinformationen, die dem Zellenindex entsprechen, in Antwort auf die Hinzufügungsanweisung hinzuzufügen.

8. Verfahren nach einem der Ansprüche 5 bis 7, wobei
die in dem Primärzellen-Änderungsbefehl transportierten Konfigurationsinformationen der Primärzelle und der Sekundärzelle Delta-Konfigurationsinformationen oder vollständige Konfigurationsinformationen in Bezug auf die gespeicherten Konfigurationsinformationen der Quell-Primärzelle sind; oder
die in dem Primärzellen-Änderungsbefehl transportierten Konfigurationsinformationen der Primärzelle Delta-Konfigurationsinformationen oder vollständige Konfigurationsinformationen in Bezug auf die gespeicherten Konfigurationsinformationen der Quell-Primärzelle sind; und die in dem Primärzellen-Änderungsbefehl transportierten Konfigurationsinformationen der Sekundärzelle Delta-Konfigurationsinformationen oder vollständige Konfigurationsinformationen in Bezug auf die gespeicherten Konfigurationsinformationen der Quell-Sekundärzelle sind.

9. Benutzerendgerät, aufweisend:
ein Schnittstellenmodul (201), das dazu konfiguriert ist, Konfigurationsinformationen einer Primärzelle und einer Sekundärzelle aus einem Primärzellen-Änderungsbefehl zu erhalten; und
ein Konfigurationsmodul (202), das dazu konfiguriert ist, Konfigurationsinformationen einer Ziel-Primärzelle und einer Ziel-Sekundärzelle aus den erhaltenen Konfigurationsinformationen der Primärzelle und der Sekundärzelle in Kombination mit gespeicherten Konfigurationsinformationen aller von einer Quell-Primärzelle und einer Quell-Sekundärzelle zu erhalten und von der Quell-Primärzelle und der Quell-Sekundärzelle zu der Ziel-Primärzelle und der Ziel-Sekundärzelle zu wechseln;
wobei die Primärzellen-Übergabe eine Übergabe in einer Basisstation oder über Basisstationen sein kann; in einem Fall einer Übergabe in einer Basisstation ist dann das Schnittstellenmodul (201) dazu konfiguriert, einen Primärzellen-Änderungsbefehl zu empfangen, der von einer Basisstation gesendet wird; im Fall einer Übergabe über Basisstationen ist dann das Schnittstellenmodul (201) dazu konfiguriert, einen Primärzellen-Änderungsbefehl, der von einer Ziel-Basisstation gesendet wird, zu empfangen, wobei der Primärzellen-Änderungsbefehl durch die Zielbasisstation gemäß den von einer Quell-Basisstation gesendeten Konfigurationsinformationen einer Quell-Primärzelle und/oder einer Quell-Sekundärzelle erzeugt wird.

10. Benutzerendgerät nach Anspruch 9, wobei der Primärzellen-Änderungsbefehl eine Löschungsanweisung und eine Hinzufügungsanweisung aufweist; und
das Konfigurationsmodul (202) einen Zellenindex einer Sekundärzelle, der in der Löschungsanweisung enthalten ist, und Konfigurationsinformationen, die dem Zellenindex entsprechen, löscht, und einen Zellenindex einer Sekundärzelle, der in der Hinzufügungsanweisung enthalten ist, und in dem Primärzellen-Änderungsbefehl transportierte Konfigurationsinformationen, die dem Zellenindex entsprechen, hinzufügt.

11. Benutzergerät nach Anspruch 10, wobei, wenn die Löschungsanweisung und die Hinzufügungsanweisung denselben Zellenindex aufweisen, das Konfigurationsmodul (202) zuerst den Zellenindex und die Konfigurationsinformationen, die dem Zellenindex entsprechen, in Antwort auf die Löschungsanweisung löscht, und dann den Zellenindex und die in dem Primärzellen-Änderungsbefehl transportierten Konfigurationsinformationen, die dem Zellenindex entsprechen, in Antwort auf die Hinzufügungsanweisung hinzufügt.

12. Benutzerendgerät nach einem der Ansprüche 9 bis 11, wobei die in dem Primärzellen-Änderungsbefehl transportierten Konfigurationsinformationen der Primärzelle und der Sekundärzelle Delta-Konfigurationsinformationen oder vollständige Konfigurationsinformationen in Bezug auf die gespeicherten Konfigurationsinformationen der Quell-Primärzelle sind; oder
die in dem Primärzellen-Änderungsbefehl transportierten Konfigurationsinformationen der Primärzelle Delta-Konfigurationsinformationen oder vollständige Konfigurationsinformationen in Bezug auf die gespeicherten Konfigurationsinformationen der Quell-Primärzelle sind; und die in dem Primärzellen-Änderungsbefehl transportierten Konfigurationsinformationen der Sekundärzelle Delta-Konfigurationsinformationen oder vollständige Konfigurationsinformationen in Bezug auf die gespeicherten Konfigurationsinformationen der Quell-Sekundärzelle sind.

13. Basisstation, aufweisend:
ein Steuermodul (401), das dazu konfiguriert ist, einen Primärzellen-Änderungsbefehl zu erzeugen, der Konfigurationsinformationen einer Primärzelle aufweist; und
ein Schnittstellenmodul (402), das dazu konfiguriert ist, den Primärzellen-Änderungsbefehl an ein Benutzerendgerät UE zu übertragen, um das UE anzuweisen, Konfigurationsinformationen einer Ziel-Primärzelle und einer Ziel-Sekundärzelle aus den in dem Primärzellen-Änderungsbefehl transportierten Konfigurationsinformationen der Primärzelle und der Sekundärzelle in Kombination mit gespeicherten Konfigurationsinformationen aller von einer Quell-Primärzelle und einer Quell-Sekundärzelle zu erhalten, und von der Quell-Primärzelle und der Quell-Sekundärzelle zu der Ziel-Primärzelle und der Ziel-Sekundärzelle zu wechseln;
wobei die Primärzellen-Übergabe eine Übergabe in einer Basisstation oder über Basisstationen sein kann; in einem Fall einer Übergabe in einer Basisstation ist dann das Steuermodul (402) dazu konfiguriert, eine Übergabe zu entscheiden und erzeugt den Primärzellen-Änderungsbefehl; in einem Fall einer Übergabe über Basisstationen ist dann das Steuermodul (402) dazu konfiguriert, eine Übergabeanfrage zu empfangen, die von einer Quell-Basisstation gesendet wird, und erzeugt einen Primärzellen-Änderungsbefehl gemäß den in der Übergabeanfrage transportierten Konfigurationsinformationen einer Quell-Primärzelle und/oder einer Quell-Sekundärzelle, wobei die Basisstation zum Entscheiden der Übergabe die Quell-Basisstation ist.

14. Basisstation nach Anspruch 13, wobei der Primärzellen-Änderungsbefehl eine Löschungsanweisung und eine Hinzufügungsanweisung aufweist; und
das Schnittstellenmodul (401) den Primärzellen-Änderungsbefehl an das UE überträgt, um das UE anzuweisen, einen Zellenindex einer Sekundärzelle, der in der Löschungsanweisung enthalten ist, und Konfigurationsinformationen, die dem Zellenindex entsprechen, zu löschen, und einen Zellenindex einer Sekundärzelle, der in der Hinzufügungsanweisung enthalten ist, und in dem Primärzellen-Änderungsbefehl transportierte Konfigurationsinformationen, die dem Zellenindex entsprechen, hinzuzufügen.

15. Basisstation nach Anspruch 14, wobei, wenn die Löschungsanweisung und die Hinzufügungsanweisung den gleichen Zellenindex aufweisen, das Schnittstellenmodul den Primärzellen-Änderungsbefehl an das UE überträgt, um das UE anzuweisen, zuerst den Zellenindex und die Konfigurationsinformationen, die dem Zellenindex entsprechen, in Antwort auf die Löschungsanweisung zu löschen, und dann den Zellenindex und die in dem Primärzellen-Änderungsbefehl transportierten Konfigurationsinformationen, die dem Zellenindex entsprechen, in Antwort auf die Hinzufügungsanweisung hinzuzufügen.

## Revendications

1. Procédé de configuration de cellule pour changer une cellule primaire, comprenant :
l'obtention (501) par un équipement utilisateur, UE, d'informations de configuration d'une cellule primaire et d'une cellule secondaire à partir d'un ordre de changement de cellule primaire ; et
l'obtention (502) par l'UE d'informations de configuration d'une cellule primaire cible et d'une cellule secondaire cible à partir des informations de configuration obtenues de la cellule primaire et de la cellule secondaire en combinaison avec des informations de configuration stockées d'une cellule primaire source et d'une cellule secondaire source et le changement de la cellule primaire source et de la cellule secondaire source en la cellule primaire cible et la cellule secondaire cible ;
un transfert de cellule primaire peut être un transfert dans une station de base ou à travers des stations de base ; dans le cas d'un transfert dans une station de base, alors l'UE reçoit un ordre de changement de cellule primaire envoyé par une station de base ; dans le cas d'un transfert à travers des stations de base, alors l'UE reçoit un ordre de changement de cellule primaire envoyé par une station de base cible ; l'ordre de changement de cellule primaire est généré par la station de base cible selon les informations de configuration d'une cellule primaire source et/ou d'une cellule secondaire source envoyées par une station de base source.

2. Procédé selon la revendication 1, dans lequel l'ordre de changement de cellule primaire comprend une instruction de suppression et une instruction d'ajout ; et
la mise à jour par l'UE des informations de configuration stockées de la cellule secondaire source avec les informations de configuration de la cellule secondaire portées dans l'ordre de changement de cellule primaire comprend : la suppression par l'UE d'un indice de cellule d'une cellule secondaire compris dans l'instruction de suppression et des informations de configuration correspondant à l'indice de cellule, et l'ajout d'un indice de cellule d'une cellule secondaire compris dans l'instruction d'ajout et des informations de configuration portées correspondant à l'indice de cellule.

3. Procédé selon la revendication 2, dans lequel, lorsque l'instruction de suppression et l'instruction d'ajout comprennent le même indice de cellule, l'UE supprime tout d'abord l'indice de cellule et les informations de configuration correspondant à l'indice de cellule en réponse à l'instruction de suppression, puis ajoute l'indice de cellule et les informations de configuration portées correspondant à l'indice de cellule en réponse à l'instruction d'ajout.

4. Procédé selon l'une quelconque des revendications 1 à 3, dans lequel les informations de configuration de la cellule primaire et de la cellule secondaire portées dans l'ordre de changement de cellule primaire sont des informations de configuration en triangle ou des informations de configuration complète par rapport aux informations de configuration stockées de la cellule primaire source ; ou
les informations de configuration de la cellule primaire portées dans l'ordre de changement de cellule primaire sont des informations de configuration en triangle ou des informations de configuration complète par rapport aux informations de configuration stockées de la cellule primaire source ; et les informations de configuration de la cellule secondaire portées dans l'ordre de changement de cellule primaire sont des informations de configuration en triangle ou des informations de configuration complète par rapport aux informations de configuration stockées de la cellule secondaire source.

5. Procédé de configuration de cellule pour changer une cellule primaire, comprenant :
la génération (601) par une station de base d'un ordre de changement de cellule primaire comprenant des informations de configuration d'une cellule primaire ; et
la transmission (602) par la station de base de l'ordre de changement de cellule primaire à un équipement utilisateur, UE, pour donner l'instruction à l'UE d'obtenir des informations de configuration d'une cellule primaire cible et d'une cellule secondaire cible à partir des informations de configuration de la cellule primaire et d'une cellule secondaire portées dans l'ordre de changement de cellule primaire en combinaison avec des informations de configuration stockées à la fois d'une cellule primaire source et d'une cellule secondaire source et de changer de la cellule primaire source et de la cellule secondaire source en la cellule primaire cible et la cellule secondaire cible ;
un transfert de cellule primaire peut être un transfert dans une station de base ou à travers des stations de base ; dans le cas d'un transfert dans une station de base, alors la station de base décide du transfert et génère l'ordre de changement de cellule primaire ; dans le cas d'un transfert à travers des stations de base, alors la station de base reçoit une demande de transfert envoyée par une station de base source, et génère un ordre de changement de cellule primaire selon des informations de configuration d'une cellule primaire source et/ou d'une cellule secondaire source portées dans la demande de transfert, dans lequel la station de base servant à décider du transfert est la station de base source.

6. Procédé selon la revendication 5, dans lequel l'ordre de changement de cellule primaire comprend une instruction de suppression et une instruction d'ajout ; et
la transmission par la station de base de l'ordre de changement de cellule primaire à l'UE comprend : la transmission par la station de base de l'ordre de changement de cellule primaire à l'UE pour donner l'instruction à l'UE de supprimer un indice de cellule d'une cellule secondaire compris dans l'instruction de suppression et des informations de configuration correspondant à l'indice de cellule, et d'ajouter un indice de cellule d'une cellule secondaire compris dans l'instruction d'ajout et des informations de configuration, portées dans l'ordre de changement de cellule primaire, correspondant à l'indice de cellule.

7. Procédé selon la revendication 6, dans lequel, lorsque l'instruction de suppression et l'instruction d'ajout comprennent le même indice de cellule, la transmission par la station de base de l'ordre de changement de cellule primaire à l'UE comprend : la transmission par la station de base de l'ordre de changement de cellule primaire à l'UE pour donner l'instruction à l'UE de supprimer tout d'abord l'indice de cellule et les informations de configuration correspondant à l'indice de cellule en réponse à l'instruction de suppression puis d'ajouter l'indice de cellule et les informations de configuration, portées dans l'ordre de changement de cellule primaire, correspondant à l'indice de cellule en réponse à l'instruction d'ajout.

8. Procédé selon l'une quelconque des revendications 5 à 7, dans lequel les informations de configuration de la cellule primaire et de la cellule secondaire portées dans l'ordre de changement de cellule primaire sont des informations de configuration en triangle ou des informations de configuration complète par rapport aux informations de configuration stockées de la cellule primaire source ; ou
les informations de configuration de la cellule primaire portées dans l'ordre de changement de cellule primaire sont des informations de configuration en triangle ou des informations de configuration complète par rapport aux informations de configuration stockées de la cellule primaire source ; et les informations de configuration de la cellule secondaire portées dans l'ordre de changement de cellule primaire sont des informations de configuration en triangle ou des informations de configuration complète par rapport aux informations de configuration stockées de la cellule secondaire source.

9. Équipement utilisateur, comprenant :
un module d'interface (201) configuré pour obtenir des informations de configuration d'une cellule primaire et d'une cellule secondaire à partir d'un ordre de changement de cellule primaire ; et
un module de configuration (202) configuré pour obtenir des informations de configuration d'une cellule primaire cible et d'une cellule secondaire cible à partir des informations de configuration obtenues de la cellule primaire et de la cellule secondaire en combinaison avec des informations de configuration stockées à la fois d'une cellule primaire source et d'une cellule secondaire source et pour changer de la cellule primaire source et de la cellule secondaire source en la cellule primaire cible et la cellule secondaire cible ;
un transfert de cellule primaire peut être un transfert dans une station de base ou à travers des stations de base ; dans le cas d'un transfert dans une station de base, alors le module d'interface (201) est configuré pour recevoir un ordre de changement de cellule primaire envoyé par une station de base ; dans le cas d'un transfert à travers des stations de base, alors le module d'interface (201) est configuré pour recevoir un ordre de changement de cellule primaire envoyé par une station de base cible ; l'ordre de changement de cellule primaire est généré par la station de base cible selon les informations de configuration d'une cellule primaire source et/ou d'une cellule secondaire source envoyées par une station de base source.

10. Équipement utilisateur selon la revendication 9, dans lequel l'ordre de changement de cellule primaire comprend une instruction de suppression et une instruction d'ajout ; et
le module de configuration (202) supprime un indice de cellule d'une cellule secondaire compris dans l'instruction de suppression et des informations de configuration correspondant à l'indice de cellule, et ajoute un indice de cellule d'une cellule secondaire compris dans l'instruction d'ajout et des informations de configuration, portées dans l'ordre de changement de cellule primaire, correspondant à l'indice de cellule.

11. Équipement utilisateur selon la revendication 10, dans lequel, lorsque l'instruction de suppression et l'instruction d'ajout comprennent le même indice de cellule, le module de configuration (202) supprime tout d'abord l'indice de cellule et les informations de configuration correspondant à l'indice de cellule en réponse à l'instruction de suppression, puis ajoute l'indice de cellule et les informations de configuration, portées dans l'ordre de changement de cellule primaire, correspondant à l'indice de cellule en réponse à l'instruction d'ajout.

12. Équipement utilisateur selon l'une quelconque des revendications 9 à 11, dans lequel les informations de configuration de la cellule primaire et de la cellule secondaire portées dans l'ordre de changement de cellule primaire sont des informations de configuration en triangle ou des informations de configuration complète par rapport aux informations de configuration stockées de la cellule primaire source ; ou
les informations de configuration de la cellule primaire portées dans l'ordre de changement de cellule primaire sont des informations de configuration en triangle ou des informations de configuration complète par rapport aux informations de configuration stockées de la cellule primaire source ; et les informations de configuration de la cellule secondaire portées dans l'ordre de changement de cellule primaire sont des informations de configuration en triangle ou des informations de configuration complète par rapport aux informations de configuration stockées de la cellule secondaire source.

13. Station de base, comprenant :
un module de commande (401) configuré pour générer un ordre de changement de cellule primaire comprenant des informations de configuration d'une cellule primaire ; et
un module d'interface (402) configuré pour transmettre l'ordre de changement de cellule primaire à un équipement utilisateur, UE, pour donner l'instruction à l'UE d'obtenir des informations de configuration d'une cellule primaire cible et d'une cellule secondaire cible à partir des informations de configuration de la cellule primaire et de la cellule secondaire portées dans l'ordre de changement de cellule primaire en combinaison avec des informations de configuration stockées à la fois d'une cellule primaire source et d'une cellule secondaire source et de changer de la cellule primaire source et de la cellule secondaire source en la cellule primaire cible et la cellule secondaire cible ;
un transfert de cellule primaire peut être un transfert dans une station de base ou à travers des stations de base ; dans le cas d'un transfert dans une station de base, alors le module de commande (402) est configuré pour décider du transfert et génère l'ordre de changement de cellule primaire ; dans le cas d'un transfert à travers des stations de base, alors le module de commande (402) est configuré pour recevoir une demande de transfert envoyée par une station de base source, et génère un ordre de changement de cellule primaire selon des informations de configuration d'une cellule primaire source et/ou d'une cellule secondaire source portées dans la demande de transfert, dans laquelle la station de base servant à décider du transfert est la station de base source.

14. Station de base selon la revendication 13, dans laquelle l'ordre de changement de cellule primaire comprend une instruction de suppression et une instruction d'ajout ; et
le module d'interface (401) transmet l'ordre de changement de cellule primaire à l'UE pour donner l'instruction à l'UE de supprimer un indice de cellule d'une cellule secondaire compris dans l'instruction de suppression et des informations de configuration correspondant à l'indice de cellule, et d'ajouter un indice de cellule d'une cellule secondaire compris dans l'instruction d'ajout et des informations de configuration, portées dans l'ordre de changement de cellule primaire, correspondant à l'indice de cellule.

15. Station de base selon la revendication 14, dans laquelle, lorsque l'instruction de suppression et l'instruction d'ajout comprennent le même indice de cellule, le module d'interface transmet l'ordre de changement de cellule primaire à l'UE pour donner l'instruction à l'UE de supprimer tout d'abord l'indice de cellule et les informations de configuration correspondant à l'indice de cellule en réponse à l'instruction de suppression, puis d'ajouter l'indice de cellule et les informations de configuration, portées dans l'ordre de changement de cellule primaire, correspondant à l'indice de cellule en réponse à l'instruction d'ajout.
